# DEMANDE DE BREVET EUROPEEN

(11) **EP 1 340 610 A1**
(43) Date de publication de la demande: **03.09.2003**
(21) Numéro de dépôt: 03290459.1
(22) Date de dépôt: 27.02.2003
(51) Int. Cl.: B29C 70/46, B29C 70/08

(54) **Procédé de fabrication de pièces en matériau composite à épaisseur localement réduite**

(30) Priorité: 28.02.2002 FR 0202531
(71) Demandeur: Matra Venture Composites, 78191 Trappes (FR)
(72) Inventeur: Recouvreur, Michel, 41200 Pruniers en Sologne (FR)
(74) Mandataire: David, Alain

(57) **Abrégé**

Procédé de fabrication de pièces en matériau composite, dans lequel on introduit tout d'abord dans une zone déterminée d'une première partie de moule une préforme de renfort (20), puis on dépose dans cette première partie de moule des flancs de matériau composite (30) d'une surface et d'une épaisseur initiales déterminées, et on recouvre la première partie de moule par une seconde partie de moule comportant dans une zone localisée en regard de la zone déterminée une surépaisseur interne apte à former une cavité de forme complémentaire (30D) dans la pièce finale obtenue après compression à chaud des deux parties de moule, la pièce finale présentant ainsi une réduction d'épaisseur au niveau de cette zone localisée (30A). La surface et l'épaisseur initiales des flancs en matériau composite sont déterminées de façon à entraîner un surmoulage partiel ou total de la préforme de renfort par fluage de ces flancs lors de la compression à chaud.

## Description

### Domaine de l'invention

La présente invention se rapporte à un procédé de fabrication de pièces en matériau composite polyester comme, par exemple, des pièces de carrosseries de véhicules automobiles.

### Art antérieur

Les pièces en matériau composite polyester de type SMC (sheet molding compound) sont de plus en plus utilisées en remplacement de pièces métalliques dans la fabrication de tous types d'équipements du fait de leur faible coût de fabrication, de leur absence de corrosion et de leur résistance aux chocs notamment.

En particulier, dans le domaine automobile, ces pièces formées classiquement dans un moule par compression à chaud d'une résine polyester renforcée par des fibres de diverses natures trouvent application dans la réalisation de tout type d'éléments de carrosserie tels que pare-chocs, portes, capots ou toit par exemple. Or, ces éléments subissent en général, après cette étape de moulage et avant leur montage sur un véhicule automobile, des opérations d'usinage traditionnels tels que des perçages pour la fixation de pièces mécaniques annexes. Ainsi, par exemple, les portes doivent recevoir des charnières métalliques ou encore une serrure, et les pare-chocs des axes d'articulation ou de fixation. Malheureusement, ces inserts métalliques sont en général conçus de façon standard pour un montage sur des pièces de carrosserie en tôle métallique dont l'épaisseur est inférieure à 1 mm alors que les pièces en matériau composite de véhicule automobile présentent une épaisseur égale ou supérieure à 2 mm pour conserver un bel aspect externe et des propriétés mécaniques optimales.

### Objet et définition de l'invention

La présente invention a donc pour objet un procédé de fabrication de pièces en matériau composite polyester qui permet de réduire localement l'épaisseur de ces pièces afin d'autoriser le montage d'inserts métalliques standards. Un but de l'invention est aussi de réaliser un procédé qui conserve voire renforce les propriétés mécaniques en rigidité de la pièce d'origine dans la zone locale de réduction d'épaisseur. Un autre but de l'invention est de proposer un procédé qui facilite ensuite l'intégration d'inserts mécaniques au niveau de cette zone locale d'épaisseur réduite. Encore un but de l'invention est de mettre au point un procédé de fabrication simple, peu coûteux et particulièrement adapté à la fabrication d'équipements industriels et en particulier de pièces de carrosseries de véhicules automobiles.

Ces buts sont atteints par un procédé de fabrication de pièces en matériau composite dans lequel on introduit tout d'abord dans une zone déterminée d'une première partie de moule formant poinçon une préforme de renfort, puis on dépose ensuite dans cette première partie de moule des flancs de matériau composite d'une surface et d'une épaisseur initiales déterminées, et on recouvre la première partie de moule par une seconde partie de moule formant matrice, cette seconde partie de moule comportant dans une zone localisée en regard de ladite zone déterminée une surépaisseur interne apte à former une cavité de forme complémentaire dans la pièce finale obtenue après compression à chaud des deux parties de moule, ladite pièce finale présentant une réduction d'épaisseur au niveau de ladite zone localisée.

La surface et l'épaisseur initiales des flancs en matériau composite sont déterminées de façon à entraîner un surmoulage partiel ou total de la préforme de renfort par fluage de ces flancs lors de la compression à chaud.

Avantageusement, la préforme de renfort est préalablement recouverte d'un primaire d'accrochage pour améliorer l'adhérence du matériau composite sur cette préforme de renfort lors du fluage des flancs.

La zone localisée de réduction d'épaisseur a une surface inférieure à celle de ladite zone déterminée de réception de la préforme de renfort et le matériau composite est un matériau composite polyester, de préférence du type SMC LP (Sheet Molding Compound Low Profile).

Selon le mode de réalisation envisagé, la préforme de renfort peut être constituée soit d'un matériau composite, de préférence un tissu pré-imprégné à base de fibres de verre ou de carbone, dont les propriétés mécaniques de rigidité sont supérieures à celles desdits flancs de matériau composite, soit d'un matériau métallique dont les propriétés mécaniques de rigidité sont supérieures à celles desdits flancs de matériau composite.

La présente invention concerne également les pièces en matériau composite de structure hybride obtenues par le procédé précité.

### Brève description des dessins

Les caractéristiques et avantages de la présente invention ressortiront mieux de la description suivante, faite à titre indicatif et non limitatif, en regard des dessins annexés sur lesquels :
- la figure 1 illustre la première étape du procédé de fabrication selon l'invention d'un matériau support de type SMC présentant une réduction locale d'épaisseur,
- la figure 2 illustre la deuxième étape du procédé de fabrication selon l'invention d'un matériau support de type SMC présentant une réduction locale d'épaisseur,
- la figure 3 illustre la troisième étape du procédé de fabrication selon l'invention d'un matériau support de type SMC présentant une réduction locale d'épaisseur,
- la figure 4 montre la structure finale du matériau issu du procédé de fabrication des figures 1 à 3, et
- la figure 5 montre la structure de matériau de la figure 4 après détourage et montage d'un insert métallique.

### Description détaillée d'un mode de réalisation préférentiel

Le matériau support auquel est appliqué le procédé de fabrication de l'invention est un matériau composite polyester qui se présente sous la forme d'un matériau moulé en plaques (SMC sheet molding compound). Dans cette catégorie, on s'intéressera plus particulièrement au SMC LP (sheet molding compound low profile) qui présente l'avantage de comporter un bon aspect de surface à l'issue de son processus de fabrication par compression à chaud, même si, comme tous les matériaux composites moulés, il présente naturellement dans sa structure et au niveau de sa surface des porosités (micro-pores) pouvant renfermer des résidus gazeux de ce processus qui sont une source potentielle de dégazage (notamment en cas de réchauffage ultérieur du support).

Ces matériaux composites sont utilisés dans tous types d'industrie pour la fabrication d'équipements les plus divers. Dans le domaine automobile, ils trouvent particulièrement application pour la réalisation de pièces dont la surface est égale ou supérieure à 0.5m² telles que pare-chocs, portes, capots ou toits de véhicules où ils remplacent avantageusement les pièces métalliques antérieures.

Or, ces pièces de carrosserie automobile, dont l'épaisseur moyenne est égale ou supérieure à 2 mm, typiquement 2.3 mm, doivent recevoir des inserts métalliques standard conçus pour des pièces de carrosserie en tôle métallique dont l'épaisseur est inférieure à 1 mm, typiquement de 0.7 à 0.9 mm.

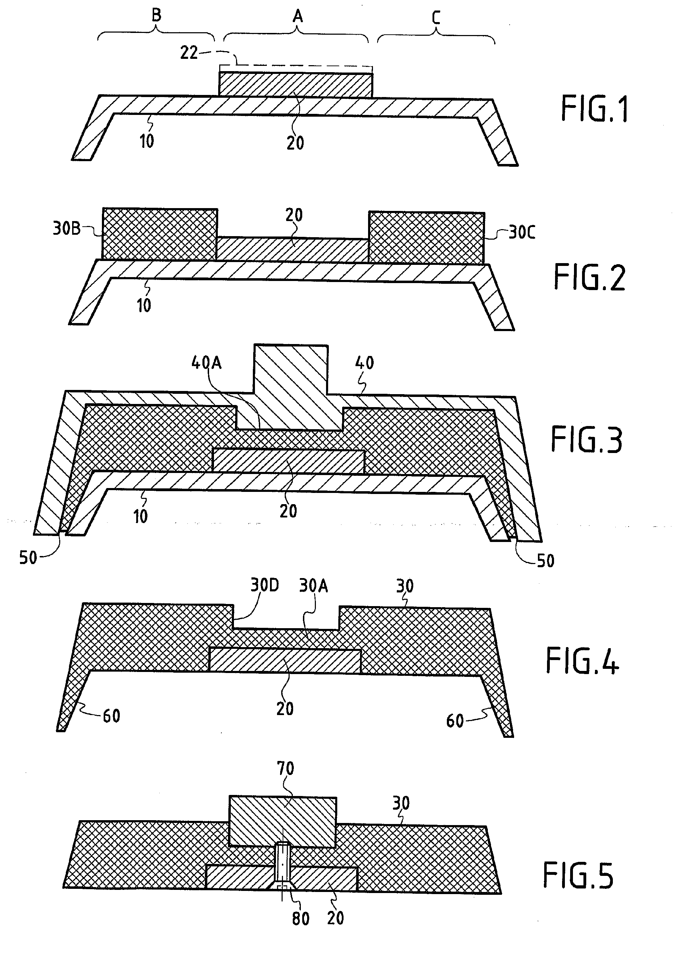

Le procédé de fabrication de pièces en matériau composite selon l'invention, explicité en regard des figures 1 à 5, a donc pour objet de réaliser des pièces en matériau composite présentant une réduction locale d'épaisseur tout en conservant voire améliorant à ce niveau la rigidité initiale de la pièce d'origine.

La première étape de procédé (figure 1) consiste à introduire dans une première partie de moule 10 formant poinçon, au niveau d'une zone déterminée A où l'on désire obtenir une réduction d'épaisseur de la pièce finale en SMC, une préforme de renfort 20 dont les propriétés mécaniques de rigidité sont supérieures à celle de la pièce en SMC. Cette structure de renfort peut être une structure en composite de type SMC haute performance, un tissu pré-imprégné à base de fibres de verre ou de carbone (par exemple un époxy-carbone), ou une structure métallique en acier, inox ou aluminium par exemple. Selon le type de structure de la préforme de renfort, composite ou métallique, et notamment s'il s'agit d'une structure métallique, celle-ci peut être recouverte d'un primaire d'accrochage 22.

Une fois la préforme de renfort en place dans le moule, il est procédé dans la seconde étape illustrée à la figure 2, à l'introduction, dans la première partie de moule 10, de flancs de SMC 30B, 30C de part et d'autre de la préforme de renfort 20. Les dimensions de ces flancs, et notamment leur surface et leur épaisseur, sont déterminées de façon qu'une fois le moule fermé (voir étape suivante) et la compression à chaud réalisée, la structure finale obtenue épouse pleinement les formes internes du moule pour une épaisseur finale déterminée.

La troisième étape (figure 3) est l'étape de fermeture du moule par une seconde partie de moule 40 formant matrice qui vient coopérer avec le poinçon 10 et donc recouvrir les flancs 30B, 30C ainsi que la préforme de renfort 20 disposés préalablement dans cette première partie de moule 10. On notera, aux extrémités du moule (et donc hors de sa partie utile), les passages 50 destinés à laisser s'évacuer la matière ayant fluée en excès. La seconde partie de moule présente une partie interne en surépaisseur 40A en regard de la zone A dont la forme en relief est destinée à créer la zone locale de réduction d'épaisseur.

La fermeture du moule entraîne, sous l'effet de la pression et de la température mise en jeu, un fluage des flancs en SMC 30B, 30C qui vont venir surmouler partiellement ou totalement la préforme de renfort 20 et former par liaison physico-chimique une bande de SMC 30A adhérant parfaitement, sans aucun collage ou assemblage, à cette préforme de renfort. Eventuellement, comme explicité précédemment, l'adhérence du matériau composite SMC peut être améliorée par l'adjonction du primaire d'accrochage 22 sur la préforme de renfort.

A la fin du cycle de fabrication, le SMC durcit et le moule peut être ouvert. La structure finale obtenue est illustrée à la figure 4. C'est une structure hybride 20-30, de préférence 100% composite lorsque le renfort 20 est lui-même en composite, avec une cavité 30D dont la forme correspond exactement en complément (en creux) à la partie en surépaisseur ou relief interne 40A de la seconde partie de moule 40 et un excédant de matière 60 (en l'espèce en forme de jupe) qu'il conviendra ensuite d'éliminer par détourage et ébavurage. La zone locale de réduction d'épaisseur correspondant à cette cavité a de préférence une surface inférieure à celle de la zone A de réception de la préforme de renfort.

La structure hybride finale, illustrée à la figure 5, présente l'intérêt de conserver les propriétés mécaniques du SMC initial tout en permettant ensuite l'insertion et l'assemblage de dispositifs mécaniques ayant une épaisseur prédéfinie, par exemple une charnière métallique de porte 70 montée sur une porte 30 par l'intermédiaire de moyens de liaison 80 traversant la préforme de renfort 20.

Avec la nouvelle technologie de l'invention, il devient possible de réduire l'épaisseur d'une pièce SMC à moins de 1 mm (l'épaisseur moyenne d'une pièce SMC de carrosserie automobile étant égale ou supérieure à 2 mm, typiquement 2.3 mm) sans en affecter les propriétés mécaniques et ceci quelle que soit la géométrie de la pièce (qui ne dépend que de celle du moule). Elle permet également le renforcement structural des pièces par surmoulage local. Les conditions de pression et de température du procédé traditionnel de compression à chaud sont en outre conservées.

## Revendications

1. Procédé de fabrication de pièces en matériau composite, dans lequel on introduit tout d'abord dans une zone déterminée d'une première partie de moule formant poinçon (10) une préforme de renfort (20), puis on dépose ensuite dans cette première partie de moule des flancs de matériau composite (30B, 30C) d'une surface et d'une épaisseur initiales déterminées, et on recouvre la première partie de moule par une seconde partie de moule formant matrice (40), cette seconde partie de moule comportant dans une zone localisée en regard de ladite zone déterminée une surépaisseur interne (40A) apte à former une cavité de forme complémentaire (30D) dans la pièce finale obtenue après compression à chaud des deux parties de moule, ladite pièce finale présentant ainsi une réduction d'épaisseur au niveau de ladite zone localisée.

2. Procédé selon la revendication 1, **caractérisé en ce que** lesdites surface et épaisseur initiales des flancs en matériau composite sont déterminées de façon à entraîner un surmoulage partiel ou total de la préforme de renfort par fluage de ces flancs lors de la compression à chaud.

3. Procédé selon la revendication 2, **caractérisé en ce que** ladite préforme de renfort est préalablement recouverte d'un primaire d'accrochage (22) pour améliorer l'adhérence du matériau composite sur cette préforme de renfort lors du fluage des flancs.

4. Procédé selon la revendication 1, **caractérisé en ce que** ladite zone localisée de réduction d'épaisseur a une surface inférieure à celle de ladite zone déterminée de réception de la préforme de renfort.

5. Procédé selon la revendication 1, **caractérisé en ce que** ledit matériau composite est un matériau composite polyester.

6. Procédé selon la revendication 5, **caractérisé en ce que** ledit matériau composite polyester est du type SMC LP (Sheet Molding Compound Low Profile).

7. Procédé selon la revendication 1, **caractérisé en ce que** ladite préforme de renfort est constituée d'un matériau composite dont les propriétés mécaniques de rigidité sont supérieures à celles desdits flancs de matériau composite.

8. Procédé selon la revendication 7, **caractérisé en ce que** ledit matériau composite est un tissu pré-imprégné à base de fibres de verre ou de carbone.

9. Procédé selon la revendication 1, **caractérisé en ce que** ladite préforme de renfort est constituée d'un matériau métallique dont les propriétés mécaniques de rigidité sont supérieures à celles desdits flancs de matériau composite.

10. Pièce en matériau composite obtenue selon le procédé de fabrication de l'une quelconque des revendications 1 à 9.
